# EUROPÄISCHE PATENTANMELDUNG

(11) **EP 2 489 813 A2**
(43) Veröffentlichungstag der Anmeldung: **22.08.2012**
(21) Anmeldenummer: 12001039.2
(22) Anmeldetag: 16.02.2012
(51) Int. Cl.: E04F 15/12, E01C 7/35

(54) **Sichtflächenbelag, Verfahren zu dessen Herstellung sowie Verwendung eines Stoffgemisches hierfür**

(30) Priorität: 17.02.2011 DE 102011011612; 14.02.2012 DE 102012002687
(71) Anmelder: Bautenschutz O+R GmbH, 40721 Hilden (DE)
(72) Erfinder: Röhrig, Martel, 40882 Ratingen (DE)
(74) Vertreter: Marks, Frank

(57) **Zusammenfassung**

Die Erfindung betrifft einen Sichtflächenbelag, ein Verfahren zu seiner Herstellung sowie die Verwendung eines Stoffgemisches hierfür, zum Einsatz auf hochbelasteten Fußböden insbesondere in Gewerbebauten. Es wird vorgeschlagen, ein niedrigviskoses Trägermaterial mit einer einer Viskosität von weniger als 600 mPa·s bei 20°C auf Basis von Epoxidharzen, Polyurethan, Polymethylmethacrylat oder Polyurea in einer Schichtdicke von 0,3 bis 3 Millimeter aufzutragen und nach vollständigem Auftrocknen zu schleifen. Dem Sichtflächenbelag können effektgebende Zuschlagstoffe beigemischt sein. Als Trägermaterial wird ein Stoffgemisch bestehend aus mindestens einem lösemittelfreien aromatischen Bindemittel und mindestens einem aminischen Härter verwendet.

## Beschreibung

Die Erfindung betrifft einen Sichtflächenbelag, ein Verfahren zu seiner Herstellung sowie die Verwendung eines Stoffgemisches hierfür, zum Einsatz auf nahezu jeder Oberfläche, vorzugsweise hochbelasteten Fußböden insbesondere auch in Gewerbebauten.

Derartige Sichtflächenbeläge werden als Bodenbeläge insbesondere aber nicht abschließend auf Fußböden in Fabrikationsgebäuden, Lagergebäuden, Parkhäusern, Kaufhäusern sowie in Kultur- und Freizeitstätten eingesetzt.

Aus dem Stand der Technik sind Bodenbeläge bekannt, die aus einer Aneinanderreihung einer Vielzahl von Einzelelementen bestehen. Dazu zählen insbesondere Bodenbeläge aus Naturstein, Fliesen und Parkett. Nachteilig ist bereits der hohe Arbeitsaufwand bei der Verlegung dieser Bodenbeläge. Darüber hinaus weisen diese Bodenbeläge eine Aufbauhöhe von mindestens 5 Millimeter für das Parkett - in Abhängigkeit von dem Grad der zu erwartenden Beanspruchung entsprechend mehr- auf, die zur eigentlichen Nutzung nicht nötig ist. Die Aufbauhöhe beträgt bei Fliesen mindestens 7 Millimeter und bei Naturstein mindestens 10 Millimeter.

Wie am Beispiel einer Fliese, die aufgrund ihrer Dicke als sehr robust und widerstandsfähig gilt, leicht einzusehen ist, wird der Bodenbelag als defekt eingestuft, wenn die Oberfläche einer Fliese zerstört ist. Der aufwändige Aufbau "in der Tiefe" ist demnach nicht geeignet, die Widerstandsfähigkeit des Bodenbelags zu erhöhen. Bei Sanierung dieser Flächen muss erst aufwändig das bestehende Bodensystem zumindest teilweise entfernt werden, um Platz für einen erneuten Aufbau zu schaffen. Diese systembedingten Nachteile gelten auch für Bodenbeläge aus Naturstein.

Neben dem hohen Aufwand hinsichtlich Material- und Arbeitseinsatz sind darüber hinaus die Fugen zwischen den bodenbildenden Einzelelementen als nachteilig anzusehen. Auf diesen Böden abrollende Räder erzeugen störende Geräusche. Die Unterbrechungen zwischen den widerstandsfähigen Einzelelementen erleichtern den Eintritt von zerstörerischen Flüssigkeiten in das Bodensystem, die beispielsweise zu Frostaufbruch oder Aufquellen des Parketts führen.

Darüber hinaus sind Bodenbeläge bekannt, die als sogenannte Verlaufbeschichtung auf der Basis von hochviskosen Kunststoffen wie insbesondere Polyurethan, Epoxydharz oder Polymethylmethacrylat in flüssiger Phase aufgetragen werden. Bei einer Aufbauhöhe ab 3 Millimeter ist die Verlegung durch eine Vielzahl zum Teil unmittelbar aufeinanderfolgender Arbeitsschritte sehr aufwendig insbesondere durch die nötige sorgfältige Entlüftung des hochviskosen Belagmaterials zur Vermeidung der Einlagerung von Blasen, die die Widerstandsfähigkeit des Bodenbelags beeinträchtigen. Darüber hinaus bringt der Einsatz von hochviskosen Kunststoffsystemen einen hohen Materialeinsatz mit sich.

Ferner ist bekannt, derartige Bodenbeläge auf der Basis von hochviskosen Kunststoffen während der Abbindung mit Kunststoffchips zu bestreuen, die in die flüssige Phase des Belagmaterials einsinken. Dadurch wird die Widerstandsfähigkeit des Bodenbelags beeinträchtigt.

Der Erfindung liegt daher die Aufgabe zugrunde, einen Sichtflächenbelag anzugeben, der bei möglichst geringer Schichtdicke eine hohe Widerstandsfähigkeit aufweist und mit geringem Aufwand zu verlegen ist.

Erfindungsgemäß wird diese Aufgabe mit den Mitteln des Patentanspruchs 1 gelöst. Verfahrenstechnisch wird diese Aufgabe darüber hinaus mit den Schritten gemäß Patentanspruch 5 gelöst. Schließlich ist in Patentanspruch 8 eine Verwendung eines Stoffgemisches für einen solchen Bodenbelag gezeigt. Vorteilhafte Ausgestaltungen der Erfindung sind in den jeweils rückbezogenen Ansprüchen angegeben.

Erfindungsgemäß besteht der Sichtflächenbelag aus einem niedrigviskosen Trägermaterial mit einer Viskosität von weniger als 600 mPa·s bei 20°C in einer Schichtdicke von 0,3 bis 3 Millimeter.

Der Sichtflächenbelag ist auf festen, tragfähigen und starren Oberflächen sowohl horizontal als auch vertikal auftragbar. Der Sichtflächenbelag ist somit sowohl für Fußböden als auch für Wände geeignet.

Das Trägermaterial ist zum Auftrag auf jede Art von starrer Oberfläche wie Betone, Estriche, Spachtelmassen, Putze, Beschichtungen, Fliesen, Holz, Metalle oder Gipsplatten nach geeigneter Vorbereitung entweder direkt oder nach Grundierung geeignet.

Das Trägermaterial ist ein Stoffgemisch im Wesentlichen bestehend aus einem aromatischen Bindemittel und einem aminischen Härter. Vorteilhafterweise härtet ein solches Trägermaterial starr aus. Dabei werden durch die oberflächennahe Applikation im unmittelbaren Bereich der Oberfläche die robusten Eigenschaften des Untergrunds übernommen. Auf diese Weise wird eine hohe Tritt- und Haftfestigkeit auf dem Untergrund erreicht.

Vorzugsweise werden als Trägermaterial benetzungswillige Epoxyde mit geringer Vergilbungsneigung verwendet. Darüber hinaus kommen Trägermaterialien auf der Basis von Polyurethan, Polymethylmethacrylat oder Polyurea zur Anwendung.

Vorteilhafterweise kommt der Sichtflächenbelag durch die Verwendung dünnflüssiger, lösemittelfreier Trägermaterialien mit einem geringen Materialaufwand aus.

Darüber hinaus ist der Sichtflächenbelag zur tragenden Oberfläche dichtend gegenüber Flüssigkeiten, insbesondere Wasser, Salzlösungen sowie eine Reihe von umweltgefährdenden Flüssigkeiten. Das gilt für alle genannten Trägermaterialien, da diese eine hohe chemische Resistenz aufweisen. Die Resistenz gegenüber speziellen Flüssigkeiten ist bei Bedarf auf Anforderung zu prüfen. Durch die geeignete Auswahl eines der genannten Trägermaterialien sind bekannte Anforderungen erfüllbar.

Vorteilhafterweise sind die Schichtdicke des Sichtflächenbelages so gering und die Haftfestigkeit auf bestehenden Untergründen so groß, dass bei Sanierungsarbeiten vorausgehende aufwändige Abbrucharbeiten bestehender Beläge vermieden werden kann. Darüber hinaus sind durch die geringe Schichtdicke des Sichtflächenbelages Höhenanpassungen angrenzender Bauteile verzichtbar.

Nach einem weiteren Merkmal der Erfindung sind dem Trägermaterial effektgebende Zuschlagstoffe beigemischt. Durch diese effektgebenden Zuschlagstoffe wird das individuelle optische Erscheinungsbild des Sichtflächenbelages geprägt.

Vorteilhafterweise kommt der Sichtflächenbelag durch die geringe Schichtdicke mit einem geringen Materialaufwand an Zuschlagstoffen aus. Darüber hinaus bewirkt die starr aushärtende Trägerschicht eine dauerhafte Einbindung der effektgebenden Zuschlagstoffe. Trotz der geringen Schichtdicke ist der Sichtflächenbelag robust gegenüber mechanischen Beanspruchungen.

Nach weiteren Merkmalen der Erfindung weisen die Zuschlagstoffe Farbpartikel und/oder Metallpartikel auf. Vorteilhafterweise ergeben die Zuschlagstoffe für sich oder in Kombination in Abhängigkeit von ihrem Anteil an der Masse des Sichtflächenbelages beliebig einstellbare optische Effekte der Sichtfläche des Sichtflächenbelages.

Durch die Verwendung von Metallpartikeln wird die Belastbarkeit der Oberfläche erhöht und der metallische Glanz auf Flächen gebracht.

Durch die Verwendung von hochwertigen Kunststoffpartikeln sind die Oberflächen robust und lichtstabil.

Die Partikel werden je nach Material in einer Korngröße von 0,1 - 1 mm Größe eingesetzt.

Darüber hinaus sind mineralische Stoffe als effektgebende Zuschlagstoffe geeignet. Hierzu zählt Steinbruch aus insbesondere aber nicht abschließend Granit, Schiefer oder Glimmer.

Nach einem weiteren Merkmal der Erfindung werden dem Trägermaterial natürliche Materialien zugeschlagen. Hierzu gehören vorteilhafterweise Nussschalen wie insbesondere aber nicht abschließend Kokosnussschalen oder Walnussschalen.

Dadurch weist der erfindungsgemäße Sichtflächenbelag eine natürliche Haptik auf. Diese Eigenschaft macht den Sichtflächenbelag auch für den Wohnbau attraktiv.

Die Sichtflächen werden immer durch Schleif- und Versiegelungsvorgänge zur gewünschten Optik geführt. Durch Mischen verschiedener Zuschlagstoffe und unterschiedliche Nachbearbeitungsschritte ist eine große Bandbreite visueller Eigenschaften realisierbar.

Dabei kommt ein weiterer Vorteil der geringen Schichtdicken zum Tragen. Der Sichtflächenbelag kommt mit einer geringen Menge an effektgebenden Zuschlagstoffen zur Erzielung eines erwartungsgemäßen optischen Erscheinungsbildes aus. Somit sind auch hochwertige effektgebende Zuschlagstoffe, wie Metallpartikel, verlustarm applizierbar, da sie oberflächennah in das Trägermaterial des Sichtflächenbelages eingelagert werden und nicht in den Tiefen des Trägermaterials versinken.

Der Sichtflächenbelag wird in zwei aufeinanderfolgenden Schrittfolgen hergestellt. In einer ersten Schrittfolge wird ein Stoffgemisch, das mindestens ein Trägermaterial mit einer Viskosität von weniger als 600 mPa·s bei 20°C auf Basis von Epoxydharzen enthält, in einem dünnen Film gleichmäßig auf den Untergrund aufgetragen. In den noch feuchten Film werden die effektgebenden Zuschlagsstoffe dann vollsatt eingeworfen oder eingeblasen. Nach der Ausreaktion des Trägermaterials werden die ungebundenen Partikel entfernt.

Je nach Beschaffenheit des Untergrundes und den Anforderungen an das optische Erscheinungsbild des Sichtflächenbelages, insbesondere bei gravierenden Farbunterschieden zwischen dem vorhandenen Untergrund und den neuen Sichtflächenbelag wird die erste Schrittfolge rekursiv wiederholt.

Zur Endbehandlung wird in einer zweiten Schrittfolge die Sichtfläche des Sichtflächenbelages aufeinanderfolgend geschliffen und versiegelt. In Abhängigkeit von der gewünschten Oberflächengüte wird die zweite Schrittfolge mit unterschiedlichen Schleif- und Versiegelungsschritten zum gewünschten Endresultat rekursiv wiederholt.

In Abhängigkeit von der Art und der Intensität des Schliffes erhält die Sichtfläche des Sichtflächenbelages individuelle lichtreflektierende Eigenschaften.

In einer alternativen Ausführungsform der Erfindung werden dem Trägermaterial alle effektgebenden Zuschlagstoffe vor dem Auftrag auf die zu belegenden Oberfläche beigemischt. In Abhängigkeit von der Art und der Menge der beigemischten Zuschlagstoffe werden die optischen Eigenschaften jedes Sichtflächenbelages individuell eingestellt. Auf die durch Absandung vorbereitete Fläche wird das Gemisch aus dem Trägermaterial und den beigemischten Zuschlagsstoffen in Spachteltechnik vollflächig aufgetragen. Nach dem Auftrag und vollständiger Reaktion wird die Oberfläche versiegelt und geschliffen. Die Spachteltechnik eignet sich insbesondere zur Herstellung von zusätzlichen individuellen Mustern durch Schablonen auf bereits mit dem erfindungsgemäßen Verfahren erstellten Oberflächen.

Vorteilhafterweise sind durch einfache Mischprozesse individuelle, den jeweiligen Kundenanforderungen genügenden Sichtflächen hinsichtlich Farbe und Muster herstellbar.

Nach einem weiteren Merkmal der Erfindung wird ein Stoffgemisch bestehend aus mindestens einem lösemittelfreien, vorzugsweise aromatischen Bindemittel und mindestens einem aminischen Härter als Trägermaterial für effektgebende Zuschlagstoffe verwendet.

Nach alternativen Merkmalen der Erfindung weist das Bindemittel aliphatische und/oder cycloaliphatische und/oder multifunktionelle Bestandteile auf.

Nach einem weiteren Merkmal der Erfindung weist der Härter neben seinem aminischen Bestandteil aliphatische und/oder cycloaliphatische Stoffe auf.

Wegen seiner dekorativen Wirkung kommen erfindungsgemäße Bodenbeläge neben der Verwendung im gewerblichen Bereich auch im privaten Bereich zur Anwendung.

## Patentansprüche

1. Sichtflächenbelag für starre Oberflächen von Bauwerken
**gekennzeichnet durch**
ein niedrigviskoses Trägermaterial mit einer Viskosität von weniger als 600 mPa·s bei 20°C, das in einer Schichtdicke von 0,3 bis 3 Millimeter aufgetragen ist.

2. Sichtflächenbelag nach Anspruch 1
**dadurch gekennzeichnet,**
**dass** dem Trägermaterial effektgebende Zuschlagstoffe beigegeben sind.

3. Sichtflächenbelag nach Anspruch 2
**dadurch gekennzeichnet,**
**dass** die Zuschlagstoffe Farbstoffe aufweisen.

4. Sichtflächenbelag nach Anspruch 2
**dadurch gekennzeichnet,**
**dass** die Zuschlagstoffe Metallpartikel aufweisen.

5. Sichtflächenbelag nach Anspruch 2
**dadurch gekennzeichnet,**
**dass** die Zuschlagstoffe Kunststoffpartikel aufweisen.

6. Sichtflächenbelag nach einem der Ansprüche 1 bis 5
**dadurch gekennzeichnet,**
**dass** das Trägermaterial hauptsächlich aus Epoxydharz besteht.

7. Sichtflächenbelag nach einem der Ansprüche 1 bis 5
**dadurch gekennzeichnet,**
**dass** das Trägermaterial hauptsächlich aus Polyurethan besteht.

8. Sichtflächenbelag nach einem der Ansprüche 1 bis 5
**dadurch gekennzeichnet,**
**dass** das Trägermaterial hauptsächlich aus Polymethylmethacrylat besteht.

9. Sichtflächenbelag nach einem der Ansprüche 1 bis 5
**dadurch gekennzeichnet,**
**dass** das Trägermaterial hauptsächlich aus Polyurea besteht.

10. Verfahren zur Herstellung eines Sichtflächenbelages für starre Oberflächen von Bauwerken
**dadurch gekennzeichnet,**
**dass** in einer ersten Schrittfolge ein Stoffgemisch, das mindestens ein Trägermaterial mit einer Viskosität von weniger als 600 mPa·s bei 20°C enthält, in einer Schichtdicke von 0,3 bis 3 Millimeter aufgetragen wird und dass in einer zweiten Schrittfolge nach vollständiger Reaktion des Trägermaterials die Oberfläche des Bodenbelages geschliffen und versiegelt wird.

11. Verfahren nach Anspruch 10
**dadurch gekennzeichnet,**
**dass** in den noch feuchten Film aufgetragenen Trägermaterials effektgebende Zuschlagsstoffe vollflächig eingeworfen oder eingeblasen werden.

12. Verfahren nach Anspruch 10
**dadurch gekennzeichnet,**
**dass** dem Trägermaterial vor dem Auftrag auf die zu belegenden Oberfläche Partikel effektgebender Zuschlagstoffe beigemischt werden.

13. Verfahren nach einem der Ansprüche 11 und 12
**dadurch gekennzeichnet,**
**dass** durch den Beschliff der Sichtfläche des Sichtflächenbelages die lichtreflektierenden Eigenschaften der Partikel der effektgebenden Zuschlagstoffe eingestellt werden.

14. Verwendung eines Stoffgemisches bestehend aus mindestens einem lösemittelfreien aromatischen Bindemittel und mindestens einem aminischen Härter als Trägermaterial für effektgebende Zuschlagstoffe eines Sichtflächenbelages nach Ansprüchen 1 bis 13.
